# EUROPÄISCHE PATENTSCHRIFT

(11) **EP 2 920 277 B1**
(45) Veröffentlichungstag und Bekanntmachung des Hinweises auf die Patenterteilung: **23.09.2020**
(21) Anmeldenummer: 13789286.5
(22) Anmeldetag: 08.11.2013
(51) Int. Cl.: C10L 9/08, C10B 53/02, C10B 57/14, B01J 8/10, B01J 8/12, B01J 8/06, B01J 8/00

(54) **MEHRETAGENOFEN UND VERFAHREN ZUR THERMISCHEN BEHANDLUNG EINES STOFFSTROMS**
MULTI-LEVEL FURNACE AND METHOD FOR THERMAL TREATMENT OF A MATERIAL FLOW
FOUR À PLUSIEURS ÉTAGES ET PROCÉDÉ DE TRAITEMENT THERMIQUE D'UN FLUX DE MATIÈRE

(30) Priorität: 16.11.2012 DE 102012111050
(43) Veröffentlichungstag der Anmeldung: 23.09.2015
(73) Patentinhaber: thyssenkrupp Industrial Solutions AG, 45143 Essen (DE)
(72) Erfinder: LAMPE, Karl, 59320 Ennigerloh (DE); KARAKUS, Yilmaz, 59229 Ahlen (DE); DENKER, Jürgen, 59269 Beckum (DE); FLEUTER, Peter, 59227 Ahlen (DE)
(74) Vertreter: thyssenkrupp Intellectual Property GmbH
(86) Internationale Anmeldenummer: PCT/EP2013/073349
(87) Internationale Veröffentlichungsnummer: WO 2014/076000

(56) Entgegenhaltungen:
- WO-A1-2012/007574
- WO-A1-2013/189888
- WO-A1-2013/190053
- US-A- 2 104 526
- US-A- 2 869 249
- US-A- 3 132 092
- US-A1- 2004 123 785

## Beschreibung

Die Erfindung betrifft einen Mehretagenofen sowie ein Verfahren zur thermischen Behandlung eines Stoffstroms, vorzugsweise eines Kohlenstoff enthaltenden Stoffstroms.

Unter der thermischen Behandlung eines Stoffstroms wird insbesondere auch eine Torrefizierung verstanden, bei der Biomasse unter Luftabschluss bei relativ niedrigen Temperaturen von 250° bis 450°C durch pyrolytische Zersetzung thermisch behandelt wird.

Aus der WO 2012/007574 A1 ist eine Vorrichtung und ein Verfahren zur Trocknung und Torrefizierung wenigstens eines kohlenstoffhaltigen Stoffstroms in einem Etagenofen bekannt. Dort finden die Trocknung und die Torrefizierung in zwei unterschiedlichen, räumlich voneinander getrennten Prozessräumen statt. Diese räumliche Trennung ermöglicht eine gezielte, auf den jeweiligen Prozess (Trocknung bzw. Torrefizierung) abgestimmte Einstellung der Atmosphäre. Auf diese Weise kann die Effizienz und damit auch der Durchsatz der Vorrichtung deutlich gesteigert werden. Die zwischen den beiden Prozessräumen vorgesehene Übergabeeinrichtung ist in dieser Druckschrift nicht näher spezifiziert. Es ist aber denkbar, die Gastrennung der Prozessräume mit Zellenradschleusen oder Doppelpendelklappen zu realisieren. Der Einbau dieser Schleusen ist jedoch nur außerhalb der Prozessräume möglich, sodass pro Prozessraum ein eigener Ofen benötigt wird.

Die US 3,132,092 beschreibt eine Anlage zur katalytischen Behandlung von Mineralöl-Naphtha unter Verwendung eines Katalysators. Der Katalysator wird durch die Anlage zirkuliert, wobei die katalytische Behandlung des Naphthas in einem unten liegenden Hochdruck-Reaktionskessel erfolgt. Nach dem Abführen des Katalysators aus dem Reaktionskessel wird dieser über eine Rohrleitung zu einem oberhalb des Reaktionskessels angeordneten Niederdruck-Regenerationskessel geführt und dort unter Verwendung eines Regenerationsgases regeneriert. Von dem Regenerationskessel wird der Katalysator dann chargenweise über zwei Druckkessel dem Reaktionskessel erneut zugeführt. Dabei wird abwechselnd eine Teilmenge des Katalysators in einen der Druckkessel eingebracht und über zwei Ventile von dem Regenerationskessel und dem Reaktionskessel abgetrennt. Daraufhin wird der Katalysator in dem entsprechenden Druckkessel unter Druck gesetzt und dann durch ein Öffnen des entsprechenden Ventils in den Reaktionskessel ausgebracht. Das Überführen von Teilmengen des Katalysators von dem Regenerationskessel in den Reaktionskessel erfolgt abwechselnd über die beiden Druckkessel, so dass bei einem Unterdrucksetzen des einen Druckkessels gleichzeitig der Druck in dem anderen Druckkessel reduziert wird, um diesen anschließend wieder mit dem Regenerationskessel verbinden zu können.

Die US 2004/0123785 A1 offenbart einen mehrstufigen Ofen zur thermischen Behandlung eines Materials, das über eine Zufuhr einer ersten Ofenstufe zugeführt und über eine Abfuhr aus einer zweiten Ofenstufe wieder abgeführt wird. Die beiden Ofenstufen sind gasdicht über eine Materialschleuse verbunden. Über diese wird Material chargenweise von der ersten Ofenstufe in die zweite Ofenstufe überführt, wobei immer eine von zwei Verschlussklappen der Materialschleuse verschlossen ist.

Die US 2,104,526 A1 offenbart einen Mehretagenofen zur thermischen Behandlung eines Stoffstroms mit zwei übereinander angeordneten Prozessräumen, die gastechnisch voneinander getrennt sind. Diese gastechnische Trennung wird mittels einer Übergabeeinrichtung bewirkt, die zudem für die Übergabe des Stoffstroms von dem oberen Prozessraum zu dem unteren Prozessraum vorgesehen ist. Diese Übergabeeinrichtung besteht aus zwei übereinander angeordneten, parallel zueinander ausgerichteten Förderschnecken, die mittels eines Getriebes gegenläufig rotierend angetrieben werden.

Der Erfindung liegt die Aufgabe zugrunde, den konstruktiven Aufwand der gastechnischen Trennung von zwei Prozessräume zu verringern.

Erfindungsgemäß wird diese Aufgabe durch die Merkmale der Ansprüche 1 und 8 gelöst.

Der erfindungsgemäße Mehretagenofen zur thermischen Behandlung eines Stoffstroms, vorzugsweise eines Kohlenstoff enthaltenden Stoffstroms, weist mindestens zwei übereinander angeordnete Prozessräume auf, die jeweils mindestens zwei Etagenböden vorsehen und ist mit einer oder mehreren Übergabeeinrichtungen zur Übergabe des behandelten Stoffstroms von einem oberen Prozessraum zu einem unteren Prozessraum ausgestattet, wobei die Übergabeeinrichtung zur gastechnischen Trennung der beiden Prozessräume Mittel zur Ausbildung einer Materialsäule im Übergangsbereich zwischen dem oberen und dem unteren Prozessraum aufweisen, wobei die Mittel zur Ausbildung einer Materialsäule wenigstens ein Förderaggregat oder wenigstens eine Schurre oder einen Schieber umfassen und das wenigstens eine Förderaggregat oder wenigstens eine Schurre gleichzeitig eine Materialaustragsvorrichtung für den oberen Prozessraum bildet.

Beim erfindungsgemäßen Verfahren zur thermischen Behandlung eines Stoffstroms, vorzugsweise eines Kohlenstoff enthaltenden Stoffstroms, wird dieser in einem Mehretagenofen in mindestens zwei übereinander angeordneten und gastechnisch voneinander getrennten und jeweils mit mindestens zwei Etagenböden ausgestatteten Prozessräumen behandelt. Der Stoffstrom wird durch eine Übergabeeinrichtung von einem oberen Prozessraum zu einem unteren Prozessraum übergeben, wobei zur gastechnischen Trennung der beiden Prozessräume eine Materialsäule in der Übergabeeinrichtung ausgebildet wird, wobei die Ausbildung der Materialsäule durch wenigstens ein Förderaggregat oder wenigstens eine Schurre oder einen Schieber erfolgt und die wenigstens eine Übergabeeinrichtung neben der Übergabe des Stoffstroms vom oberen zum unteren Prozessraum auch dazu benutzt wird, dass wenigstens ein Teil des Stoffstroms aus dem Mehretagenofen ausgeschleust und/oder Material von außen in den Mehretagenofen eingeführt wird.

Die Verwendung des zu behandelnden Materials, um die gastechnische Trennung der beiden Prozessräume zu gewährleisten, lässt sich konstruktiv vergleichsweise einfach realisieren. Der weitere Vorteil besteht vor allem auch darin, dass die Übergabeeinrichtung innerhalb des Mehretagenofens realisiert werden kann.

Dadurch, dass das wenigstens eine Förderaggregat gleichzeitig eine Materialaustragsvorrichtung für den oberen Prozessraum und/oder eine Materialeintragsvorrichtung für den unteren Prozessraum bildet, wird die Möglichkeit eröffnet, teilbehandeltes Material auszuschleusen oder zusätzliches Material unter Umgehung eines oberen Prozessraumes zuzuführen.

Weitere Ausgestaltungen der Erfindung sind Gegenstand der Unteransprüche.

Dabei können wenigstens drei übereinander angeordnete Prozessräume und wenigstens zwei Förderaggregate vorgesehen werden, wobei die beiden Förderaggregate dergestalt miteinander verbunden sind, dass wenigstens ein zwischen den beiden Förderaggregaten angeordneter Prozessraum umgangen wird. Es ist auch denkbar, dass einer oder beide Förderaggregate mit wenigstens einem Materiallager und/oder Zwischenlager in Verbindung stehen.

Gemäß einer ersten Ausgestaltung der Erfindung bildet das wenigstens eine Förderaggregat oder die wenigstens eine Schurre oder der Schieber gleichzeitig eine Materialeintragsvorrichtung für den unteren Prozessraum zum Einführen von Material von außen in den Mehretagenofen.

Gemäß einer bevorzugten Ausgestaltung des Förderaggregats weist dieses eine mit dem oberen Prozessraum in Verbindung stehende erste Zuführöffnung und eine an einem Endbereich des Förderaggregats vorgesehene und mit dem unteren Prozessraum in Verbindung stehende erste Auslassöffnung auf. Weiterhin kann eine mit einer Materialaufgabe verbundene zweite Zuführeinrichtung zur direkten Aufgabe von Filterstaub, Ausschussmaterialien, geruchsintensiven Materialien oder Materialien zur Steigerung der Reaktivität oder der Förderfähigkeit in den unteren Prozessraum vorgesehen sein. Außerdem kann das Förderaggregat weiterhin eine zweite mit dem Außenbereich des Mehretagenofens in Verbindung stehende Auslassöffnung zum Ausschleusen von Material aus dem Mehretagenofen aufweisen. Das bzw. die Förderaggregate sind daher zweckmäßigerweise mit einem reversierbaren Antrieb ausgestattet, um die Zuführöffnung fördertechnisch mit der ersten oder zweiten Auslassöffnung zu verbinden.

Anstelle eines Förderaggregats können die Mittel zur Ausbildung einer Materialsäule gemäß einem anderen Ausführungsbeispiel der Erfindung auch eine Schurre umfassen, in der sich eine Materialsäule ausbildet.

Zur Überwachung der gastechnischen Trennung der beiden Prozessräume ist gemäß einem weiteren Aspekt der Erfindung vorgesehen, dass der Differenzdruck zwischen dem oberen und unteren Prozessraum ermittelt wird. Dann besteht auch die Möglichkeit, dass die Fördergeschwindigkeit des wenigstens einen Förderaggregats in Abhängigkeit des gemessenen Differenzdrucks so geregelt wird, dass eine gastechnische Trennung der beiden Prozessräume sichergestellt ist.

Diese gastechnische Trennung der Prozessräume ermöglicht es, dass die Temperatur und/oder die Feuchte und/oder der Druck in den beiden Prozessräumen individuell eingestellt werden kann. Die thermische Behandlung des Stoffstroms in den einzelnen Prozessräumen erfolgt dabei vorzugsweise mit Hilfe eines Behandlungsgasstromes, der jedem Prozessraum zugeführt und nach Einwirkung auf dem Stoffstroms wieder abgeführt wird. Durch die gastechnische Trennung übereinanderliegender Prozessräume besteht die Möglichkeit, die Strömungsrichtung des Behandlungsgases in Bezug auf die Materialflussrichtung individuell einzustellen, wobei die Strömungsrichtung des Behandlungsgases in wenigstens einem oberen Prozessraum vorzugsweise im Gleichstrom und wenigstens einem unteren Prozessraum im Gegenstrom eingestellt wird. Die Gleichstrombehandlung ist insbesondere bei der Trocknung des Stoffstroms von Vorteil, während die Torrefizierung zweckmäßigerweise im Gegenstrom erfolgt.

Weitere Ausgestaltungen der Erfindung werden im Folgenden anhand der Beschreibung einiger Ausführungsbeispiele und der Zeichnung näher erläutert.

In der Zeichnung zeigen
- Fig. 1: eine schematische Darstellung eines Mehretagenofens gemäß einem ersten Ausführungsbeispiel,
- Fig. 2: eine schematische Detailansicht der als Förderaggregat ausgebildeten Übergabeeinrichtung,
- Fig. 3: eine schematische Darstellung eines Mehretagenofens gemäß einem Ausführungsbeispiel, das nicht sämtliche Merkmale einer erfindungsgemäßen Vorrichtung aufweist, und
- Fig. 4: eine schematische Darstellung eines Mehretagenofens gemäß einem dritten Ausführungsbeispiel.

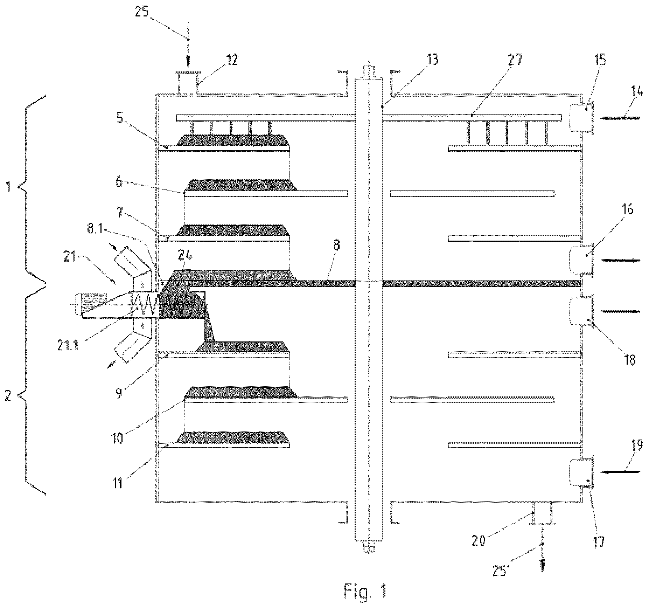

Der in Fig. 1 dargestellte Mehretagenofen zur thermischen Behandlung eines Stoffstroms dient beispielsweise zur Trocknung und Torrefizierung eines Kohlenstoff enthaltenden Stoffstroms. Er weist zwei übereinander angeordnete Prozessräume 1, 2 auf, die jeweils mehrere Etagenböden 5 bis 11 aufweisen. Der zu behandelnde Stoffstrom 25 wird über eine Zuführeinrichtung 12 von oben dem Prozessraum 1 zugeführt. Der Materialtransport auf den Etagenböden erfolgt über übliche Transporteinrichtungen, wie beispielsweise ein mit einer Zentralsäule 13 rotierendes Krälarmsystem 27, die das Material zu innen- oder außenliegenden Öffnungen transportieren, wo das Material auf den nächst tieferen Etagenboden fällt. Grundsätzlich ist natürlich auch denkbar, dass die Etagenböden mit der Zentralsäule 13 rotieren und mit feststehenden Abstreifern zusammenwirken. In Fig. 1 ist lediglich ein Krälarmsystem 27 im Bereich des Etagenbodens 5 dargestellt. Selbstverständlich sind solche Krählarmsysteme auch im Bereich der anderen Etagenböden vorgesehen.

Die Wärmebehandlung des Stoffstroms 25 im oberen Prozessraum 1 erfolgt mit Hilfe eines ersten Behandlungsgasstromes 14, der über einen im oberen Bereich des Prozessraums 1 vorgesehenen Eintrag 15 zugeführt und über einen im unteren Bereich des Prozessraumes 1 vorgesehenen Austrag 16 abgeführt wird. Bei dieser Anordnung erfolgt die Wärmebehandlung im Kreuz- bzw. Gleichstrom zur Materialflussrichtung. Je nach Anwendung kann es aber auch zweckmäßig sein, die Wärmebehandlung im Gegenstrom durchzuführen. Außerdem ist es denkbar, dass mehrere Behandlungsgasströme, beispielsweise jeweils ein Behandlungsgasstrom pro Etagenboden zu- und abgeführt wird. In ähnlicher Art und Weise wird im unteren Prozessraum 2 über einen Eintrag 17 und einen Austrag 18 ein zweiter Behandlungsgasstrom 19 zu- bzw. abgeführt. Hier erfolgt die Behandlung des Stoffstroms im Gegenstrom zum Behandlungsgas. Auch hier können natürlich weitere Behandlungsgasströme zu- und abgeführt werden. Am unteren Ende des unteren Prozessraums 2 ist schließlich eine Austragsvorrichtung 20 für den behandelten Stoffstroms 25'.

Zwischen den beiden Prozessräumen 1 und 2 ist eine Übergabeeinrichtung 21 vorgesehen, die ein als Förderschnecke ausgebildetes Förderaggregat 21.1 aufweist, um den Stoffstrom vom oberen Prozessraum 1 zum unteren Prozessraum 2 unter Ausbildung einer Materialsäule 24 zu übergeben. Der unterste Etagenboden 8 des oberen Prozessraumes 1 bildet gleichzeitig die Decke des unteren Etagenraums 2. Die Öffnung 8.1 des Etagenbodens 8 stellt dabei die Verbindung zwischen den beiden Prozessräumen dar, wobei das Förderaggregat 21.1 direkt unterhalb der Öffnung 8.1 angeordnet ist.

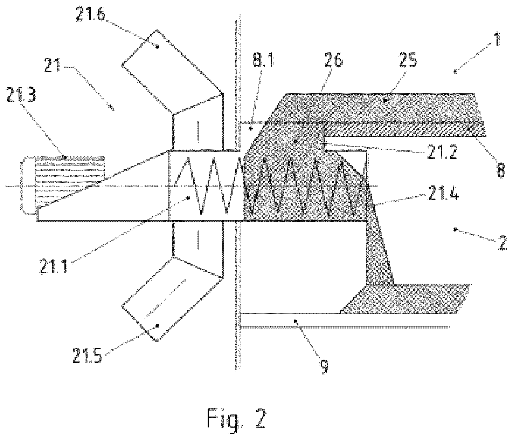

Weitere Einzelheiten werden im Folgenden anhand der Fig. 2 näher erläutert.

Das Förderaggregat 21.1 steht mit der Öffnung 8.1 des Etagenbodens 8 über eine erste Zuführöffnung 21.2 derart in Verbindung, dass der auf dem Etagenboden 8 befindliche Stoffstrom 25 über die Öffnung 8.1 unter Ausbildung einer Materialsäule 26 in das Förderaggregat 21.1 gelangt. Das Förderaggregat 21.1 weist einen Antrieb 21.3 auf, um den Stoffstrom 25 zu einer an einem Ende des Förderaggregats angeordneten ersten Auslassöffnung 21.4 zu transportieren. Der Stoffstrom fällt dort auf den Etagenboden 9 des zweiten Prozessraumes 2. Die gastechnische Trennung der beiden Prozessräume 1 und 2 wird durch die sich ausbildende Materialsäule 26 gebildet, die sich bei diesem Ausführungsbeispiel in dem als Förderschnecke ausgebildeten Förderorgan 21.1 bis zur ersten Auslassöffnung 21.4 fortsetzt. Über dem Antrieb 21.3 wird die Fördergeschwindigkeit so geregelt, dass stets eine ausreichende Materialsäule 26 vorhanden ist, um die gastechnische Trennung der beiden Prozessräume 1, 2 sicherzustellen. Hierzu könnte der Differenzdruck zwischen dem oberen und unteren Prozessraum 1 und 2 ermittelt werden, um die gastechnische Trennung zu überwachen, wobei die Fördergeschwindigkeit des Förderaggregats 21.1 in Abhängigkeit des gemessenen Differenzdruck so geregelt wird, dass die gastechnische Trennung der beiden Prozessräume sichergestellt ist.

Bei dem hier dargestellten Ausführungsbeispiel ist das Förderaggregat 21.1 an seinem der ersten Auslassöffnung gegenüberliegenden Ende mit einer zweiten Auslassöffnung 21.5 versehen, die mit dem Außenbereich des Mehretagenofens in Verbindung steht. Durch den reversierbaren Antrieb 21.3 besteht auf diese Weise die Möglichkeit, zumindest einen Teil des Stoffstroms 25 nicht in den zweiten Prozessraum 2 zu übergeben, sondern über die zweite Auslassöffnung 21.5 auszuschleusen. Dies kann beispielsweise zur Umgehung wenigstens eines Prozessraumes oder zum Ausschleusen wenigstens eines Teils der Stoffstroms in ein Material- und/oder Zwischenlager genutzt werden. Auch für den Zweck einer Probennahme könnte die zweite Auslassöffnung 21.5 eingesetzt werden. Weiterhin weist das Förderaggregat 21.1 eine zweite, außerhalb des Mehretageofens vorgesehene Zuführöffnung 21.6 auf, über die zusätzliches Material wie Filterstaub, Ausschussmaterialien, geruchsintensive Materialien oder Materialien zur Steigerung der Reaktivität und der Förderfähigkeit dem zweiten Prozessraum 2 zugeführt werden können. Die Übergabeeinrichtung 21 dient somit zum einen zur Herstellung der gastechnischen Trennung der beiden Prozessräume und des Weiteren in der hier gezeigten Ausführung auch zum Ausschleusen und/oder Zuführen von Material. Der reversierbare Antrieb 21.3 des Förderorgans 21.1 bietet auch die Möglichkeit, auf eine Verstopfung oder ein Verklemmen im Übergabebereich zu reagieren. Außerdem besteht die Möglichkeit den Stoffstrom des darüber angeordneten Prozessraumes, beispielsweise in einem Havariefall, beschleunigt auszutragen.

Das Förderaggregat 21.1 ist dabei vorzugsweise so ausgebildet und angeordnet, dass es lediglich außerhalb des Mehretagenofens, d. h. in einem kalten Bereich, gelagert ist, aber die mit der Öffnung 8.1 des Etagenbodens 8 in Verbindung stehende erste Zuführöffnung 21.2 und die erste Auslassöffnung 21.4 im Inneren des Mehretagenofens angeordnet sind. Die beiden Prozessräume 1 und 2 müssen somit nicht in zwei separaten Öfen realisiert werden, sondern können vielmehr in ein und demselben Mehretagenofen untergebracht werden.

Das Förderorgan 21.1 ist im dargestellten Ausführungsbeispiel als Förderschnecke ausgebildet. Im Rahmen der Erfindung wäre aber beispielsweise auch eine Ausbildung als Schieber denkbar.

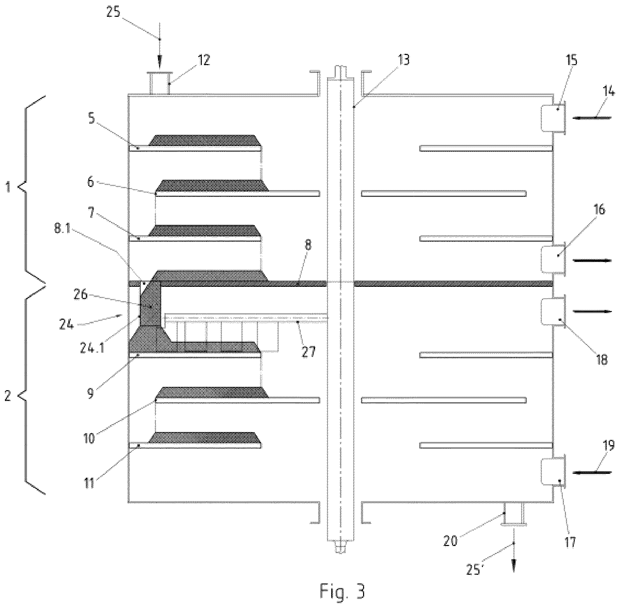

Das Ausführungsbeispiel gemäß Fig. 3 entspricht von der Ausbildung des Mehretagenofens dem Ausführungsbeispiel gemäß Fig. 1. Zwischen den beiden Prozessräumen 1 und 2 ist jedoch eine als Schurre 24.1 ausgebildete Übergabevorrichtung 24 vorgesehen. Die schachtartige Schurre 24.1 ist unmittelbar an die Öffnung 8.1. des Etagenbodens 8 angeschlossen und endet oberhalb des Etagenbodens 9, sodass sich zwischen dem Ende der Schurre 24.1 und dem Etagenboden 9 ein Schüttkegel ausbildet. Die gastechnische Trennung der beiden Prozessräume 1 und 2 wird auch bei diesem Ausführungsbeispiel durch die Materialsäule 26 sichergestellt, die sich hier in der Schurre 24.1 ausbildet. Es ist daher erforderlich, dass die Fördergeschwindigkeit, mit der sich der Stoffstrom auf dem Etagenboden 9 bewegt und dem nächst niedrigeren Etagenboden 10 zugeführt wird, so eingestellt und ggf. reguliert wird, dass in der Übergabeeinrichtung 24 immer eine ausreichende Materialsäule 26 ausbildet ist, um die gastechnische Trennung sicherzustellen. Die Fördergeschwindigkeit des Stoffstroms auf den Etagenböden wird hier durch die mit der Zentralsäule 13 drehenden Krälarmsystem 27 sichergestellt. Es ist daher durchaus zweckmäßig, wenn die Krälarmsysteme des oberen und unteren Prozessraums 1, 2 unabhängig voneinander in ihrer Geschwindigkeit regulierbar sind. Zur Überprüfung der gastechnischen Trennung der beiden Prozessräume und ggf. auch zur Regulierung der Geschwindigkeiten der Krälarmsysteme kann auch bei diesem Ausführungsbeispiel der Differenzdruck zwischen den beiden Prozessräumen ermittelt werden.

Das in Fig. 3 dargestellte Ausführungsbeispiel zeichnet sich durch eine konstruktiv einfache Übergabeeinrichtung aus. Allerdings kann hier weder Material ausgeschleust, noch von außen im Bereich der Übergabeeinrichtung zugeführt werden.

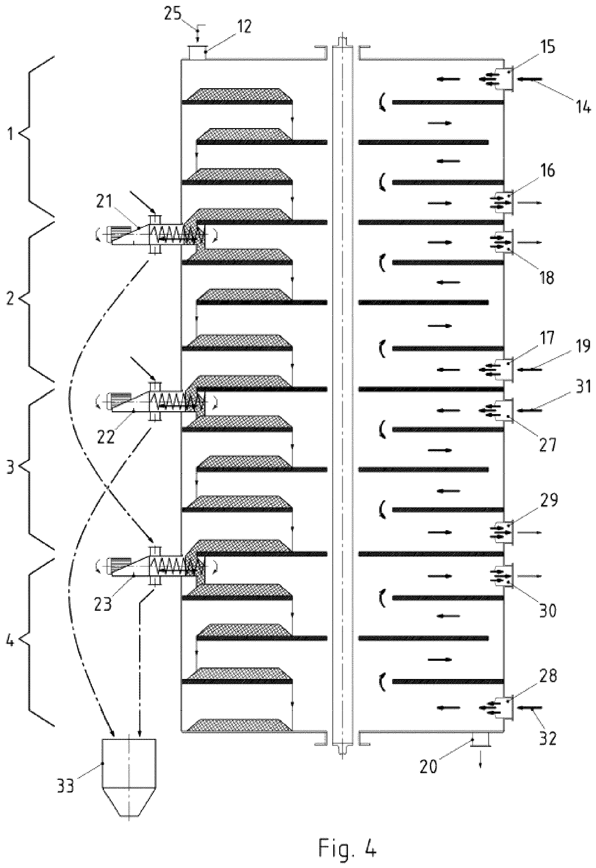

Ein Mehretagenofen mit vier übereinander angeordneten Prozessräumen 1, 2, 3 und 4 ist in Fig. 4 dargestellt. Zwischen den einzelnen Prozessräumen sind Übergabeeinrichtungen 21, 22 und 23 vorgesehen, die gemäß Fig. 2 ausgeführt sind. Jeder der Prozessräume 1 bis 4 kann über Eingänge 15, 17, 27, 28 mit individuellen Behandlungsgasströmen 14, 19, 31, 32 beaufschlagt werden, die über Ausgänge 16, 18, 29 und 30 wieder ausgeschleust werden. Auf diese Weise kann jedem Prozessraum eine bestimmte Aufgabe zugeordnet werden. So kann beispielsweise im Prozessraum 1 eine Trocknung, in den Prozessräumen 2 und 3 eine Erhitzung, Calcinierung oder Torrefizierung und im Prozessraum 4 eine Kühlung des Stoffstromes stattfinden.

Die spezielle Ausbildung der Übergabeeinrichtungen 21 bis 23 ermöglicht das Ausschleusen eines Teils des Stoffstroms, um ihn unter Umgehung einzelner Prozessräume einem weiter unterliegenden Prozessraum wieder zuzuführen oder vorzeitig auszuschleusen und einem Materiallager 33 aufzugeben.

Im dargestellten Ausführungsbeispiel wird beispielsweise ein Teilstrom des im ersten Prozessraum 1 behandelten Stoffstroms über die Übergabeeinrichtung 21 ausgeschleust und über die Übergabeeinrichtung 23 dem vierten Prozessraum zugeführt. Dadurch lässt sich beispielsweise ein getrockneter und gekühlter Stoffstrom erhalten, der keiner Torrefizierung ausgesetzt wurde.

Des Weiteren ist vorgesehen, dass ein Teilstrom über die zweite Übergabeeinrichtung 22 oder die dritte Übergabeeinrichtung 23 ausgeschleust und direkt dem Materiallager 33 aufgegeben wird.

Die hierbei ausgeschleusten Stoffströme sind teilweise oder vollständig thermisch behandelt, aber nicht gekühlt. Im Rahmen der Erfindung können, je nach Anwendung, auch andere Umgehungen bzw. Ausschleusungen vorgesehen werden.

Durch die gastechnische Trennung übereinander angeordneter Prozessräume kann über den zugeführten Behandlungsgasstrom die Temperatur und/oder die Feuchte und/oder der Druck und/oder die Atmosphäre in jedem der Prozessräume individuell eingestellt werden. Darüber hinaus besteht die Möglichkeit, die Strömungsrichtung des Behandlungsgases im Bezug auf die Materialflussrichtung für jede Prozesskammer individuell einzustellen, indem das Behandlungsgas entweder oben oder unten der jeweiligen Prozesskammer zugeführt wird. Damit kann die Strömungsrichtung des Behandlungsgases wahlweise im Gleichstrom, im Kreuz- oder im Gegenstrom zum Stoffstrom eingestellt werden. Je nachdem, ob die Prozesskammer zur Trocknung, thermischen Behandlung (Torrefizierung, Calcinierung, Erhitzung) oder Kühlung verwendet wird, kann jeweils die für die jeweilige Anwendung bevorzugte Strömungsrichtung des Behandlungsgases in Bezug auf dem Stoffstrom ausgewählt werden. Im Rahmen der Erfindung wäre es auch denkbar, dass zumindest für einzelne Etagen separate Behandlungsgase zu- bzw. abgeführt werden. In diesem Fall würde man davon sprechen, dass der Behandlungsgasstrom im Kreuzstrom zum Stoffstrom zu- bzw. abgeführt wird.

## Patentansprüche

1. Mehretagenofen zur thermischen Behandlung eines Stoffstroms (25) in mindestens zwei Prozessräumen mit
a. den mindestens zwei übereinander angeordneten Prozessräumen (1-4), die jeweils mindestens zwei Etagenböden (5-11) aufweisen, und
b. einer oder mehreren Übergabeeinrichtungen (21-24) zur Übergabe des behandelten Stoffstroms (25) von einem oberen Prozessraum (1) zu einem unteren Prozessraum (2), wobei die beiden Prozessräume (1, 2) gastechnisch voneinander getrennt sind,
**dadurch gekennzeichnet, dass** die Übergabeeinrichtung (21-24) Mittel zur Ausbildung einer Materialsäule (26) im Übergangsbereich zwischen dem oberen und dem unteren Prozessraum (1, 2) aufweist, wobei mittels der Materialsäule (26) die gastechnische Trennung der beiden Prozessräume (1, 2) gebildet wird und wobei die Mittel zur Ausbildung einer Materialsäule (26) wenigstens ein Förderaggregat (21.1) oder wenigstens eine Schurre (24.1) oder einen Schieber umfassen und das wenigstens eine Förderaggregat (21.1) oder die wenigstens eine Schurre (24.1) oder der Schieber gleichzeitig eine Materialaustragsvorrichtung für den oberen Prozessraum (1) zum Ausschleusen wenigstens eines Teils des Stoffstroms (25) aus dem Mehretagenofen bildet.

2. Mehretagenofen nach Anspruch 1, **dadurch gekennzeichnet, dass** das wenigstens eine Förderaggregat (21.1) oder die wenigstens eine Schurre (24.1) oder der Schieber gleichzeitig eine Materialeintragsvorrichtung für den unteren Prozessraum (2) zum Einführen von Material von außen in den Mehretagenofen bildet.

3. Mehretagenofen nach Anspruch 1 oder 2, **dadurch gekennzeichnet, dass** wenigstens drei übereinander angeordnete Prozessräume (1-4) und wenigstens zwei Förderaggregate (21-23) vorgesehen sind, wobei die beiden Förderaggregate (21-23) dergestalt miteinander verbunden sind, dass wenigstens ein zwischen den beiden Förderaggregaten (21-23) angeordneter Prozessraum umgangen wird.

4. Mehretagenofen nach Anspruch 3, **dadurch gekennzeichnet, dass** die wenigstens zwei Förderaggregate (22, 23) mit wenigstens einem Materiallager (33) und/oder Zwischenlager in Verbindung stehen.

5. Mehretagenofen nach Anspruch 1 oder 2, **dadurch gekennzeichnet, dass** das wenigstens eine Förderaggregat (21.1) eine mit dem oberen Prozessraum (1) in Verbindung stehende erste Zuführöffnung (21.2) und eine an einem Endbereich des Förderaggregats vorgesehene und mit dem unteren Prozessraum (2) in Verbindung stehende erste Auslassöffnung (21.4) aufweist.

6. Mehretagenofen nach Anspruch 5, **dadurch gekennzeichnet, dass** das wenigstens eine Förderaggregat (21.1) weiterhin eine mit einer Materialaufgabe verbundene zweite Zuführöffnung (21.6) zur direkten Aufgabe von Filterstaub, Ausschussmaterialien, geruchsintensiven Materialien oder Materialien zur Steigerung der Reaktivität oder der Förderfähigkeit in den unteren Prozessraum (2) aufweist.

7. Mehretagenofen nach Anspruch 5 oder 6, **dadurch gekennzeichnet, dass** das wenigstens eine Förderaggregat (21.1) weiterhin eine zweite, mit dem Außenbereich des Mehretagenofens in Verbindung stehende Auslassöffnung (21.5) zum Ausschleusen von Material aus dem Mehretagenofen aufweist.

8. Mehretagenofen nach Anspruch 5 oder 6 und Anspruch 7, **dadurch gekennzeichnet, dass** das wenigstens eine Förderaggregat (21.1) einen reversierbaren Antrieb aufweist, um die erste Zuführöffnung (21.2) fördertechnisch mit der ersten oder zweiten Auslassöffnung (21.4, 21.5) zu verbinden.

9. Verfahren zur thermischen Behandlung eines Stoffstroms (25) in einem Mehretagenofen, wobei der Stoffstrom in mindestens zwei übereinander angeordneten und gastechnisch voneinander getrennten und jeweils mit mindestens zwei Etagenböden (5-11) ausgestatteten Prozessräumen (1-4) behandelt wird und der Stoffstrom durch eine Übergabeeinrichtung (21-24) von einem oberen Prozessraum (1) zu einem unteren Prozessraum (2) übergeben wird,
**dadurch gekennzeichnet, dass** zur gastechnischen Trennung der beiden Prozessräume (1-4) eine Materialsäule (26) in der Übergabeeinrichtung (21-24) ausgebildet wird, wobei die Ausbildung der Materialsäule (26) durch wenigstens ein Förderaggregat (21.1) oder wenigstens eine Schurre (24.1) oder einen Schieber erfolgt und die wenigstens eine Übergabeeinrichtung (21-23) neben der Übergabe des Stoffstroms (25) vom oberen zum unteren Prozessraum (1, 2) auch dazu benutzt wird, einen Teil des Stoffstroms (25) aus dem Mehretagenofen auszuschleusen und/oder Material von außen in den Mehretagenofen einzuführen.

10. Verfahren nach Anspruch 9, **dadurch gekennzeichnet, dass** der Differenzdruck zwischen dem oberen und unteren Prozessraum (1, 2) ermittelt wird, um die gastechnische Trennung der beiden Prozessräume (1, 2) zu überwachen.

11. Verfahren nach Anspruch 9, **dadurch gekennzeichnet, dass** die Temperatur und/oder die Feuchte und/oder der Druck und/oder die Atmosphäre in den wenigstens zwei Prozessräumen (1-4) individuell eingestellt wird.

12. Verfahren nach Anspruch 9 und 10, **dadurch gekennzeichnet, dass** die Fördergeschwindigkeit des wenigstens einen Förderaggregats (21.1) in Abhängigkeit des gemessenen Differenzdrucks so geregelt wird, dass eine gastechnische Trennung der beiden Prozessräume (1, 2) sichergestellt ist.

13. Verfahren nach Anspruch 9, **dadurch gekennzeichnet, dass** der Stoffstrom (25) in wenigstens drei gastechnisch voneinander getrennten Prozessräumen (1-4) behandelt wird, wobei ein Teil des Stoffstroms aus einem oberen Prozessraum (1) unter Umgehung eines mittleren Prozessraumes (2, 3) einem unteren Prozessraum (4) zugeführt wird.

14. Verfahren nach Anspruch 9, **dadurch gekennzeichnet, dass** jedem Prozessraum (1-4) wenigstens ein Behandlungsgasstrom (14, 19, 31, 32) zugeführt wird, der nach Einwirkung auf den Stoffstrom (25) wieder abgeführt wird.

15. Verfahren nach Anspruch 14, **dadurch gekennzeichnet, dass** in den wenigstens zwei Prozessräumen (1-4) die Strömungsrichtung des Behandlungsgases (14, 19, 31, 32) in Bezug auf die Materialflussrichtung individuell eingestellt ist.

## Claims

1. Multi-level furnace for the thermal treatment of a material flow (25) in at least two process chambers comprising
a. the at least two process chambers (1-4) arranged one above another, each having at least two floors (5-11) for the levels, and
b. one or more transfer devices (21-24) for transferring the treated material flow (25) from an upper process chamber (1) to a lower process chamber (2), the two process chambers (1, 2) being separated gastightly from one another,
**characterized in that** the transfer device (21-24) has means for forming a column of material (26) in the transitional region between the upper and the lower process space (1, 2), wherein the gastight separation of the two process chambers (1, 2) is formed by means of the column of material (26) and wherein the means for forming a column of material (26) comprise at least one delivery unit (21.1) or at least one chute (24.1) or a slide and the at least one delivery unit (21.1) or the at least one chute (24.1) or the slide at the same time forms a material output device for the upper process chamber (1) for discharging at least part of the material flow (25) from the multi-level furnace.

2. Multi-level furnace according to Claim 1, **characterized in that** the at least one delivery unit (21.1) or the at least one chute (24.1) or the slide at the same time forms a material input device for the lower process chamber (2) for introducing material into the multi-level furnace from outside.

3. Multi-level furnace according to Claim 1 or 2, **characterized in that** at least three process chambers (1-4) arranged one above the other and at least two delivery units (21-23) are provided, wherein the two delivery units (21-23) are connected to one another in such a way that at least one process chamber arranged between the two delivery units (21-23) is bypassed.

4. Multi-level furnace according to Claim 3, **characterized in that** the at least two delivery units (22, 23) are in connection with at least one material store (33) and/or intermediate store.

5. Multi-level furnace according to Claim 1 or 2, **characterized in that** the at least one delivery unit (21.1) has a first feed opening (21.2), in connection with the upper process chamber (1), and a first outlet opening (21.4), provided at an end region of the delivery unit and in connection with the lower process chamber (2) .

6. Multi-level furnace according to Claim 5, **characterized in that** the at least one delivery unit (21.1) also has a second feed opening (21.6), connected to a material charge, for directly charging filter dust, reject materials, odour-intensive materials or materials for increasing the reactivity or the delivery capacity into the lower process chamber (2).

7. Multi-level furnace according to Claim 5 or 6, **characterized in that** the at least one delivery unit (21.1) also has a second outlet opening (21.5), in connection with the area outside the multi-level furnace, for discharging material from the multi-level furnace.

8. Multi-level furnace according to Claim 5 or 6 and Claim 7, **characterized in that** the at least one delivery unit (21.1) has a reversible drive, in order to connect the first feed opening (21.2) to the first or second outlet opening (21.4, 21.5) in terms of delivery.

9. Method for the thermal treatment of a material flow (25) in a multi-level furnace, the material flow being treated in at least two process chambers (1-4) arranged one above the other and separated gastightly from one another and respectively equipped with at least two floors (5-11) for the levels, and the material flow being transferred by a transfer device (21-24) from an upper process chamber (1) to a lower process chamber (2), **characterized in that** a column of material (26) is formed in the transfer device (21-24) for the gastight separation of the two process chambers (1-4), the forming of the column of material (26) being performed by at least one delivery unit (21.1) or at least one chute (24.1) or a slide and the at least one transfer device (21-23) being used not only for transferring the material flow (25) from the upper to the lower process chamber (1, 2) but also for discharging part of the material flow (25) from the multi-level furnace and/or for introducing material into the multi-level furnace from outside.

10. Method according to Claim 9, **characterized in that** the differential pressure between the upper and the lower process chamber (1, 2) is determined in order to monitor the gastight separation of the two process chambers (1, 2) .

11. Method according to Claim 9, **characterized in that** the temperature and/or the humidity and/or the pressure and/or the atmosphere in the at least two process chambers (1-4) is set individually.

12. Method according to Claims 9 and 10, **characterized in that** the delivery rate of the at least one delivery unit (21.1) is controlled in dependence on the measured differential pressure in such a way that a gastight separation of the two process chambers (1, 2) is ensured.

13. Method according to Claim 9, **characterized in that** the material flow (25) is treated in at least three process chambers (1-4) gastightly separated from one another, part of the material flow being fed from an upper process chamber (1) to a lower process chamber (4) while bypassing a middle process chamber (2, 3).

14. Method according to Claim 9, **characterized in that** each process chamber (1-4) is fed at least one stream of treatment gas (14, 19, 31, 32), which after acting on the material flow (25) is removed again.

15. Method according to Claim 14, **characterized in that** the direction of flow of the treatment gas (14, 19, 31, 32) with respect to the direction of material flow is set individually in the at least two process chambers (1-4).

## Revendications

1. Four à plusieurs étages destiné au traitement thermique d'un flux de substance (25) dans au moins deux chambres de processus, comprenant
a. les au moins deux chambres de processus (1-4), disposées les unes au-dessus des autres, lesquelles possèdent respectivement au moins deux fonds d'étage (5-11), et
b. un ou plusieurs dispositifs de transfert (21-24) destiné à transférer le flux de substance (25) traité d'une chambre de processus haute (1) vers une chambre de processus basse (2), les deux chambres de processus (1, 2) étant séparées l'une de l'autre du point de vue de la technique du gaz,
**caractérisé en ce que** le dispositif de transfert (21-24) possède des moyens pour former une colonne de matière (26) dans la zone de transfert entre la chambre de processus haute (1) et la chambre de processus basse (2), la séparation en technique du gaz des deux chambres de processus (1, 2) étant formée au moyen de la colonne de matière (26) et les moyens pour former une colonne de matière (26) comprenant au moins un groupe de transport (21.1) ou au moins une glissière (24.1) ou un coulisseau et l'au moins un groupe de transport (21.1) ou l'au moins une glissière (24.1) ou le coulisseau formant en même temps un arrangement de décharge de matière pour la chambre de processus haute (1) destiné à évacuer au moins une partie du flux de substance (25) hors du four à plusieurs étages.

2. Four à plusieurs étages selon la revendication 1, **caractérisé en ce que** l'au moins un groupe de transport (21.1) ou l'au moins une glissière (24.1) ou le coulisseau forme en même temps un arrangement d'introduction de matière pour la chambre de processus basse (2) destiné à introduire de la matière depuis l'extérieur dans le four à plusieurs étages.

3. Four à plusieurs étages selon la revendication 1 ou 2, **caractérisé en ce qu'**au moins trois chambres de processus (1-4) disposées les unes au-dessus des autres et au moins deux groupes de transport (21-23) sont présents, les deux groupes de transport (21-23) étant reliés l'un à l'autre de telle sorte qu'au moins une chambre de processus disposée entre les deux groupes de transport (21-23) est contournée.

4. Four à plusieurs étages selon la revendication 3, **caractérisé en ce que** les au moins deux groupes de transport (22, 23) sont en liaison avec au moins un stock de matière (33) et/ou un stock intermédiaire.

5. Four à plusieurs étages selon la revendication 1 ou 2, **caractérisé en ce que** l'au moins un groupe de transport (21.1) possède une première ouverture d'amenée (21.2) qui est en liaison avec la chambre de processus haute (1) et une première ouverture de sortie (21.4), qui se trouve au niveau d'une zone d'extrémité du groupe de transport et qui est en liaison avec la chambre de processus basse (2) .

6. Four à plusieurs étages selon la revendication 5, **caractérisé en ce que** l'au moins un groupe de transport (21.1) possède en outre une deuxième ouverture d'amenée (21.6) reliée à une alimentation en matière, destinée à l'alimentation directe en poussière de filtrage, matières de rebut, matières fortement odorantes ou matières servant à augmenter la réactivité ou l'aptitude au transport dans la chambre de processus basse (2).

7. Four à plusieurs étages selon la revendication 5 ou 6, **caractérisé en ce que** l'au moins un groupe de transport (21.1) possède en outre une deuxième ouverture de sortie (21.5) se trouvant en liaison avec la zone extérieure du four à plusieurs étages et servant à l'évacuation de matière hors du four à plusieurs étages.

8. Four à plusieurs étages selon la revendication 5 ou 6 et la revendication 7, **caractérisé en ce que** l'au moins un groupe de transport (21.1) possède un mécanisme d'entraînement réversible afin de relier en technique de transport la première ouverture d'amenée (21.2) à la première ou la deuxième ouverture de sortie (21.4, 21.5).

9. Procédé de traitement thermique d'un flux de substance (25) dans un four à plusieurs étages, le flux de substance étant traité dans au moins deux chambres de processus (1-4), disposées les unes au-dessus des autres et séparées les unes des autres du point de vue de la technique du gaz et respectivement équipées d'au moins deux fonds d'étage (5-11), et le flux de substance étant transféré par un dispositif de transfert (21-24) d'une chambre de processus haute (1) vers une chambre de processus basse (2),
**caractérisé en ce que** pour réaliser la séparation en technique du gaz des deux chambres de processus (1-4), une colonne de matière (26) est formée dans le dispositif de transfert (21-24), la formation de la colonne de matière (26) étant effectuée par au moins un groupe de transport (21.1) ou au moins une glissière (24.1) ou un coulisseau et l'au moins un dispositif de transfert (21-23), outre pour le transfert du flux de substance (25) de la chambre de processus haute vers la basse (1, 2), étant également utilisé pour l'évacuation d'une partie du flux de substance (25) hors du four à plusieurs étages et/ou pour l'introduction de la matière depuis l'extérieur dans le four à plusieurs étages.

10. Procédé selon la revendication 9, **caractérisé en ce que** la pression différentielle entre la chambre de processus haute et la basse (1, 2) est déterminée afin de surveiller la séparation en technique du gaz des deux chambres de processus (1, 2).

11. Procédé selon la revendication 9, **caractérisé en ce que** la température et/ou l'humidité et/ou la pression et/ou l'atmosphère dans les au moins deux chambres de processus (1-4) sont réglées individuellement.

12. Procédé selon la revendication 9 ou 10, **caractérisé en ce que** la vitesse de transport de l'au moins un groupe de transport (21.1) est régulée en fonction de la pression différentielle mesurée, de sorte qu'une séparation en technique du gaz des deux chambres de processus (1, 2) est garantie.

13. Procédé selon la revendication 9, **caractérisé en ce que** le flux de substance (25) est traité dans au moins trois chambres de processus (1-4) séparées les unes des autres en technique du gaz, une partie du flux de substance issu d'une chambre de processus haute (1) étant acheminée à une chambre de processus basse (4) en contournant une chambre de processus intermédiaire (2, 3) .

14. Procédé selon la revendication 9, **caractérisé en ce qu'**au moins un flux de gaz de traitement (14, 19, 31, 32) est acheminé à chaque chambre de processus (1-4), lequel est de nouveau évacué après avoir agi sur le flux de substance (25).

15. Procédé selon la revendication 14, **caractérisé en ce que** dans les au moins deux chambres de processus (1-4), la direction d'écoulement du gaz de traitement (14, 19, 31, 32) en référence à la direction du flux de matière est réglée individuellement.
